(19)

**Europäisches Patentamt**

**European Patent Office**

**Office européen des brevets**

(11) **EP 4 180 463 A1**

(12) **EUROPEAN PATENT APPLICATION**

(43) Date of publication:
**17.05.2023 Bulletin 2023/20**

(21) Application number: **21207876.0**

(22) Date of filing: **12.11.2021**

(51) International Patent Classification (IPC):
**C08B 31/12** (2006.01)     **C08L 3/08** (2006.01)
**C09J 103/08** (2006.01)     **C04B 24/38** (2006.01)

(52) Cooperative Patent Classification (CPC):
(C-Sets available)
**C08B 31/12; C04B 24/38; C08L 3/08; C09J 103/08**

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Agrana Beteiligungs-
Aktiengesellschaft
1020 Wien (AT)**

(72) Inventors:
- **WASTYN, Marnik Michel
  2320 Schwechat (AT)**
- **MANN, Karl-Jürgen
  1220 Wien (AT)**
- **KOZICH, Martin
  1220 Wien (AT)**

(74) Representative: **SONN Patentanwälte OG
Riemergasse 14
1010 Wien (AT)**

(54) **HYDROXYPROPYLATED GRANULAR STARCH WITH LOW PROPYLENE GLYCOL CONTENT**

(57)     The present invention provides a hydroxypropylated granular starch with a degree of molar substitution of hydroxypropyl groups (MS) of above 0.25 and a reduced content of volatile organic compounds (VOC), namely a propylene glycol content of below 2 wt.-% of the starch, and a process for the preparation of said hydroxypropylated granular starch. The present invention further relates to a hydroxypropylated starch with a degree of molar substitution of hydroxypropyl groups (MS) of above 0.25 and a propylene glycol content of below 2 wt.-% of the starch, and to a construction material composition or cementitious and/or dispersion-modified construction adhesive comprising said hydroxypropylated starch.

EP 4 180 463 A1

(52) Cooperative Patent Classification (CPC): (Cont.)

C-Sets
**C04B 24/38, C04B 20/023**

**Description**

The present invention provides a hydroxypropylated granular starch with a degree of molar substitution of hydroxypropyl groups (MS) of above 0.25 and a reduced content of volatile organic compounds (VOC), namely a propylene glycol content of below 2 wt.-% of the starch, and a process for the preparation of said hydroxypropylated granular starch. The present invention further relates to a hydroxypropylated starch with a degree of molar substitution of hydroxypropyl groups (MS) of above 0.25 and a propylene glycol content of below 2 wt.-% of the starch, and to a construction material composition or cementitious and/or dispersion-modified construction adhesive comprising said hydroxypropylated starch.

Starch is one of the major polysaccharides, is produced by most green plants for energy storage and consists of two types of molecules, namely helical and linear amylose and branched amylopectin. It is the most common carbohydrate in human diets and is contained in large amounts in various staple foods, such as potatoes, maize, rice, wheat and cassava. Starch is widely used in the food industry (e.g. as thickening, gelling, binding and stabilizing agent), cosmetics industry (e.g. in shampoos or deodorants, color cosmetics and skin care), construction industry (e.g. in construction material compositions or as cementitious and/or dispersion-modified construction adhesive), pharmaceutical, packaging and textile industry.

To adapt starch in accordance with certain requirements and conditions encountered during processing, storage and/or application, starch is commonly modified. Modification allows to tailor the properties of starch in accordance with the specific use and immensely broadens the portfolio of possible applications. The physical and chemical properties that can be achieved upon modification of starch depend on several parameters, such as starch source, type of substituent, extent of substitution and reaction conditions. Typical modified starch types comprise crosslinked starch, hydroxyalkyl starch, cationic starch, carboxymethylated starch and combination of said chemical modifications.

The preparation of hydroxyalkyl starches can readily be performed by processes similar to those used to alkylate alcohols, as starch has many available hydroxyl groups. Hydrogen atoms of a hydroxyl group are replaced by an alkyl or substituted alkyl radical, and an ether group is formed.

Hydroxypropylation is a type of hydroxyalkylation of starch with propylene oxide in the presence of an alkaline catalyst, which adds hydroxypropyl groups to parts of the hydroxyl groups of the glucose monomers. This hydroxypropyl modification lowers the gelatinization enthalpy and temperature, increases freeze-thaw stability, paste clarity and formation of a stable dispersion in water. By means of hydroxypropylation, inter- and intra-molecular hydrogen bonds are disrupted, which leads to weakening of the granular structure and consequently to an increase in motional freedom of starch chains in amorphous regions.

The catalogue of requirements for construction material compositions (such as mortar compositions) or construction adhesives (such as tile adhesives) according to DIN EN 12004 comprises, among other parameters, wetting capability (i.e., open time, which is the workability time after screeding until skin formation starts), slip resistance and setting time (i.e., hardening time). To ensure these minimum requirements and to achieve improved properties and processing conditions, water-soluble or water-swellable additives based on natural and/or synthetic polymer compounds or their derivatives are commonly added. With regard to natural polymer compounds, cellulose ethers and starch ethers, or mixtures thereof, are routinely used. Adding small quantities of these additives, usually less than 1 wt.-% (based on the total weight of the composition), can already result in a noticeable delay of skin formation and hence prolonged open time, increased slip resistance and a significantly delayed setting time.

EP 0 530 768 A1 relates to an additive mixture which effects an improvement of the stability and working properties, as well as increased thickening. This mixture comprises starch ethers in an amount of up to 20 wt.-% (based on the total weight of the composition), among them hydroxypropyl, carboxymethyl and hydroxypropyl carboxymethyl starch having a defined degree of derivatization. The disclosed hydroxypropylated starch has an MS in the range of 0.1 to 0.8 and a viscosity in the range of 5 mPas to 100 mPas (2% aqueous solution, measured at 20 °C).

WO 2013/058912 A1 describes an additive blend for use in a dry mix composition, which composition can also comprise starch ethers (e.g. methyl, ethyl, hydroxyethyl, hydroxypropyl, carboxymethyl ether starches) as polymeric additive. In the examples, reference is made to Amitrolit™ 8860 and Amitrolit™ 8869 which are hydroxypropylated starch ethers.

WO 2009/065159 A1 discloses a crosslinked starch derivative, for example a starch ether, with an amylopectin content above 85% for use in a construction material composition.

Due to the growing concern of environmental and health issues, the industrial focus has shifted towards the development and promotion of renewable and/or biodegradable materials. Starch is one of the major sustainable alternatives to fossil fuels, and the decrease of the VOC-content of modified starches is in agreement with additional health claims of these environment-friendly products, such as construction material compositions or construction adhesives. The quality of the indoor air is improved due to the reduced setting free of volatile organic substances.

However, when producing hydroxypropylated starch, propylene glycol (1,2-propanediol) is formed as by-product and remains in the modified starch after drum drying, according to the standard procedure of highly modified starch ethers (in gelatinized state, see e.g. EP 2212259 A1, example 1). This is a problematic issue due to increasingly stricter specifications regarding the content of volatile organic compounds (VOC). Directive 2010/75/EU defines VOCs as organic compounds having a vapor pressure of 0.01 kPa or more at 293.15 °C, or an equivalent volatility under particular conditions of use. VOCs are released naturally or artificially, e.g. by burning fuels (such as petrol, coal, natural gas or wood) or from solvents or paints. VOC emissions pollute the air and some VOCs can even harm the environment and human health. Thus, VOC emissions are increasingly being regulated and some products are even banned when they do not meet the established limits. Some building materials are high VOC emitters, such as solvent paints and adhesives, as well as coverings and coatings on walls, ceilings and floors.

In the food industry, the bound hydroxypropyl content of hydroxypropylated starches is limited to 7 wt.-% of the starch according to the EU purity criteria (Commission Regulation (EU) No 231/2012). The preparation of low-VOC hydroxypropylated starch with a low residual propylene glycol content is state of the art in the food industry. For example, Elotex® Eloset 542, a crosslinked, hydroxypropylated starch used in the food industry, comprises 6 wt.-% bound hydroxypropyl groups (corresponding to an MS of 0.14) and only 0.1 wt.-% residual propylene glycol. US 6,541,060 B2 and US 3,505,110 A also relate to hydroxypropylated starch for use in the food industry.

However, starches with a maximum bound hydroxypropyl content of 7 wt.-% (limitation in the food industry according to the EU purity criteria) are only usable for a very limited number of applications in the construction industry, as crucial properties, such as thickening capacity, slip resistance, open time, setting behavior, workability and adhesion strength, are comparably low due to the low degree of modification. The improvement of said properties by means of additional modification (e.g. carboxymethylation or crosslinking) is quite limited. In consequence, for applications in the construction industry that have higher requirements with regard to thickening, slip resistance, open time, setting behavior, workability, strength, etc., a higher content of bound hydroxypropyl groups as is allowed in the food industry according to the EU purity criteria is required.

Native starches are insoluble in cold water, however, a higher degree of chemical modification, especially hydroxypropylation, renders starch susceptible to undergo swelling or gelatinization at lower temperatures than the original gelatinization temperature. The hydroxypropylation improves the processing properties of construction material compositions, for example the smoothness, creaminess and mixing properties. Further, the introduction of hydroxypropyl groups significantly improves properties that are crucial for construction applications, such as slip resistance (particularly important e.g. for tile cement), open time, setting behavior and strength.

However, an increase of the content of hydroxypropyl groups is accompanied with a higher propylene glycol content - especially in case of modification in gelatinized state (see e.g. EP 2212259 A1, example 1). For example, the crosslinked hydroxypropylated starches Solvitose® H2060 and Opagel™ FP6 (both from Avebe, Netherlands) with a content of bound hydroxypropyl groups of 9 wt.-% and 11 wt.-%, respectively (corresponding to an MS of 0.22 and 0.26, respectively) have a much higher propylene glycol content of about 3 wt.-%. US 4,452,978 A discloses hydroxypropylated starches with hydroxypropyl substitution levels of up to 9 wt.-% for use as thickeners or adhesives.

It is known in the state of the art that the proportion of hydroxyalkyl groups which can be introduced into unswollen granule starch in suspension is limited by the tendency of the starch to swell or gelatinize at lower temperatures with increasing substitution of hydroxyalkyl groups (for example reported in US 2,845,417 A). As disclosed in US 3,577,407 A, low-substituted starch ethers with an MS of up to 0.15 are insoluble in cold water and can be readily purified by dewatering on a filter and washing the filter cake, whilst higher substituted starch ethers with an MS of above 0.15 are very difficult to purify, as they tend to swell or gelatinize, thus forming a filter cake impenetrable to water. US 3,577,407 A further refers to a pre-treatment method which allows to obtain purified hydroxypropylated potato starch with hydroxypropylation levels around 20 wt.-% which remains in its granular form.

It is an object of the present invention to provide a process to prepare a low-VOC hydroxypropylated starch with a degree of molar substitution of hydroxypropyl groups (MS) of above 0.25 and a reduced propylene glycol content, which is especially suitable for use in sustainable, environment-friendly products in the construction industry. Starting from this object, it was surprisingly found that the propylene glycol content of the hydroxypropylated granular starch can be reduced to below 2 wt.-% of the modified starch by means of the inventive process.

The present invention is directed to provide a hydroxypropylated granular starch with a degree of molar substitution of hydroxypropyl groups (MS) of above 0.25 and a propylene glycol content of below 2 wt.-% of the starch, and a process for preparing said hydroxypropylated granular starch. The present invention is further directed to a hydroxypropylated starch with an MS of above 0.25 and a propylene glycol content of below 2 wt.-% of the starch, prepared by the inventive process, and to a construction material composition or cementitious and/or dispersion-modified construction adhesive comprising said hydroxypropylated starch.

The inventive process for preparing a hydroxypropylated granular starch with a degree of molar substitution of hydroxypropyl groups (MS) of above 0.25 and a propylene glycol content of below 2 wt.-% of the starch comprises the steps of:

(a) providing a granular starch in an aqueous suspension;

(b) thermally treating the granular starch;

(c) hydroxypropylating the treated starch with a hydroxypropylating agent; and

(d) obtaining the hydroxypropylated granular starch from the aqueous suspension.

The invention is described in more detail below. It is noted that all of the embodiments of this invention as disclosed in the present application are interrelated, and each embodiment and/or disclosed characteristic feature may be combined with each other and also as any combination of two or more embodiments and/or characteristic features.

The starch used in the present invention may come from a variety of plant sources, for instance from maize, tapioca, wheat, pea, barley, rice, sago, amaranth, sorghum or banana. Further, starches with various ratios of amylose to amylopectin may be used. With regard to natural vegetable starch, amylopectin contents usually range from 70 wt.-% to 80 wt.-%. It is also possible to use an amylopectin-rich starch (also referred to as waxy starch) with an amylopectin content of above 80 wt.-% or even above 95 wt.-% in the present invention.

In a preferred embodiment according to the present invention, the starch is selected from the group consisting of maize starch, tapioca starch, wheat starch, rice starch, pea starch or any mixture thereof. Propylene glycol can be very efficiently removed when using said starch sources. Thus, a hydroxypropylated starch with a superior purity, a very low VOC content and excellent processing properties (such as slip resistance, open time, setting behavior) can be prepared.

The starch varieties used in the present invention are preferably waxy or amylopectin starches, which are beneficial due to its high amylopectin content. Amylopectin is highly branched and contains about 2,000 to 200,000 glucose units. Contrary, amylose is linear and contains a lower number of glucose units of about 300 to 3,000. Amylopectin molecules have a higher solubility in water than amylose, usually form soft pastes or gels after addition of water, and are characterized by clarity, stability and resistance to aging. Further, amylopectin-rich starch shows a lower tendency to retrogradation (gelling) during storage and cooling.

Particularly preferably, the waxy starch is a waxy maize starch, a waxy tapioca starch, a waxy wheat starch, a waxy rice starch or any mixture thereof, as these waxy starches are particularly suitable for use in the construction industry, such as for use in a construction material composition or in a cementitious and/or dispersion-modified construction adhesive.

The term "hydroxypropylated starch(es)" as used in the present application comprises granular and non-granular hydroxypropylated starch, i.e. starch which is either in its original, granular shape or which has lost their granular shape due to granule fragmenting processing conditions (e.g. drying, drum drying, gelatinization, extrusion). Such granule fragmenting processing conditions render starch cold water-soluble upon loss of its original, granular shape. The term "cold water-soluble" intends to refer to starch which gives a Brookfield viscosity of at least 100 mPas at 5% dry solids content and is stable against phase separation or settling down.

If the present application explicitly refers to "hydroxypropylated granular starch(es)", only starch consisting essentially of whole, unfragmented granules is to be understood.

The term "granular" intends to describe starch which original granular structure is still intact, although it may have been modified. Starch occurs in nature in the form of characteristically shaped particles which are called granules. This granular structure is retained even during treatments by means of acids or oxidizing agents, enzymes or during the process of converting starches to dextrins and gums. Therefore, the term "granular starch" comprises unmodified, native starch, acid-modified, thin-boiling starch, oxidized starch, bleached starch, enzymatically treated starch, british gum, dextrin, and substantially all common commercial starches which exist or are produced in their original granular shape.

In the present application, the "degree of molar substitution", also referred to as "MS", describes the average content of bound hydroxypropyl groups per anhydroglucose unit. The calculation of the MS is described in detail in the measurement section of the present application. It is noted that MS is different from the degree of substitution (DS). The DS is defined as the number of etherified hydroxyl groups per anhydroglucose unit. As there are 3 hydroxyl groups per anhydroglucose unit, the DS cannot exceed 3. As oxy-alkylating agents, such as ethylene oxide and propylene oxide, are capable of adding to an already hydroxyalkyl-substituted position, there is no upper limit to MS as there is for DS.

With regard to values given in wt.-% in this application, it is noted that such values refer to dry solid contents unless explicitly stated otherwise. Further, if a content in wt.-% of hydroxypropyl groups or propylene glycol is referred to, the given numerical value in wt.-% is based on the total weight of the starch (including other components, such as excipients or by-products generated during hydrolysis), also if not explicitly stated.

According to the inventive process for preparing a hydroxypropylated granular starch with a degree of molar substitution (MS) of hydroxypropyl groups of above 0.25 and a propylene glycol content of below 2 wt.-% of the starch, a granular starch is provided in an aqueous suspension (i.e., a slurry). The content of granular starch in the aqueous suspension is in the range of 25 wt.-% to 45 wt.-% (with regard to the total weight of starch and water), preferably in the range of 30 wt.-% to 40 wt.-%, particularly preferably around 35 wt.-%, which leads to a very good processing behavior.

The water is preferably deionized. Further ingredients of the aqueous suspension preferably comprise sodium hydroxide, sodium sulfate (or other suitable swelling-inhibiting salts) and propylene oxide.

It is noted that the granular starch could also be provided in any other slurry to prepare a hydroxypropylated granular starch according to the present invention. For example, the granular starch could be suspended in a suitable solvent, such as an alcohol. However, an aqueous suspension is advantageous with regard to processing, handling and for commercial reasons.

As is known from the prior art, the proportion of hydroxyalkyl groups, such as hydroxypropyl groups, which can be introduced into unswollen granular starch in a suspension is limited by the increasing tendency of the starch to swell or gelatinize with increasing substitution of hydroxyalkyl groups. Whilst low-substituted starch ethers with an MS up to around 0.15 are insoluble in cold water and can be readily purified by de-watering on a filter and washing the filter cake (if prepared properly), higher substituted starch ethers with an MS of above 0.15 are very difficult to purify, as they tend to swell or gelatinize, thus forming a filter cake impenetrable to water.

In the inventive process, the granular starch provided in aqueous suspension is subjected to thermal treatment, especially to annealing, to prevent and/or reduce swelling or gelatinization. The thermal treatment can be performed at elevated temperature, preferably in the range of 45 °C to 65 °C, more preferably in the range of 50 °C to 60 °C, particularly preferably in the range of 50 °C to 55 °C, for a time period of preferably at least 4 h and up to 48 h, preferably up to 24 h, which raises the gelatinization temperature of the granular starch and markedly increases the stability of the granules against swelling or gelatinization. The temperature during the thermal treatment can be fixed or can be raised stepwise in accordance with the increasing gelatinization temperature of the processed starch. In a preferred embodiment, the thermal treatment comprises a heating step, a holding step at elevated temperature in said preferred temperature range for about 6 to 8 h and a cooling step to room temperature (i.e. to about 20 °C to 25 °C), with the total duration of the thermal treatment being about 11 to 15 h.

The granular starch obtained after thermal treatment according to the inventive process is referred to as "treated starch" and exhibits increased stability of the starch granules against swelling or gelatinization. The treated starch is subsequently reacted with a hydroxyalkylating agent, especially hydroxypropylating agent, in aqueous suspension. As hydroxypropylating agent, any agent suitable to convert at least parts of the hydroxyl groups of the glucose monomers of the starch molecules into hydroxypropyl groups can be used. Suitable hydroxypropylating agents are for example propylene chlorohydrin or propylene oxide. Preferably, propylene oxide is used as hydroxypropylating agent due to its high reactivity. The starting alkalinity of the slurry is adjusted to about 0.5 to 1.1, preferably to about 0.9 to 1.0 (representing a pH value of about 11.0 to 11.5). In case a hydroxyalkylating agent with a low boiling point, such as propylene oxide with a boiling point of 35 °C, is employed, its addition to the aqueous suspension needs to be performed at low temperature. Preferably, the aqueous suspension is cooled to a temperature of 30 °C or below prior to the addition of propylene oxide. Subsequently, the aqueous suspension is heated to a temperature in the range of 30 °C to 40 °C, particularly preferably to about 35 °C. After a reaction time in the range of 12 h to 48 h, particularly preferably for about 24 h, the reaction is stopped by adjusting the pH value to about 4.0 to 5.0, preferably to 4.5, by means of an acid, such as sulfuric acid. The starch remains in its ungelatinized, granular form after hydroxypropylation, which allows, in a subsequent step, to remove formed by-products, particularly propylene glycol, to a larger extent as is known from the prior art, which markedly increases the purity of the hydroxypropylated starch.

It is noted that hydroxypropylation can also be performed with paste derivatization (also referred to as paste modification) instead of slurry modification, which is advantageous in terms of price. However, by means of paste derivatization, the subsequent removal of propylene glycol is very difficult so that hydroxypropylated starch products with a high purity and a reduced propylene glycol content, especially of below 2 wt.-% of the starch, cannot be prepared.

By means of hydroxypropylation of the treated starch with a hydroxypropylating agent according to the present invention, an MS of the hydroxypropylated starch of above 0.25 is obtained. Preferably, the MS of the hydroxypropylated starch is above 0.35, more preferably in the range of 0.36 to 0.86, more preferably in the range of 0.36 to 0.46, particularly preferably in the range of 0.36 to 0.40. Further preferably, the hydroxypropylated starch has a content of bound hydroxypropyl groups of above 9 wt.-%, preferably in the range of 12 wt.-% to 25 wt.-% of the starch. It is noted that an MS of 0.25 corresponds to a content of bound hydroxypropyl groups of 9 wt.-%. In said range of MS and the respective corresponding content of bound hydroxypropyl groups, very good processing properties, slip resistance, open time and setting behavior are achieved, and the resulting hydroxypropylated starch has a very low propylene glycol content. In a particularly preferred embodiment, the hydroxypropylated starch has a content of bound hydroxypropyl groups of 14 wt.-%, corresponding to an MS of 0.37, and a propylene glycol content of 0.5 wt.-%, which provides excellent slip resistance, open time and setting behavior. The content of bound hydroxypropyl groups, and thus the MS, remains essentially unchanged after completion of the hydroxypropylation step in all subsequent processing and/or modification steps described in this application. Therefore, the hydroxypropylated starch prepared according to the inventive process has an MS of above 0.25, before and after being subjected to granule fragmenting conditions and/or further modification steps.

Subsequent to the hydroxypropylation treatment, the hydroxypropylated granular starch is obtained from the aqueous suspension. The hydroxypropylated granular starch can for example be purified from by-products, such as propylene glycol, by means of washing, de-watering and/or drying to obtain the hydroxypropylated granular starch according to the present invention. Preferably, washing and/or de-watering of the hydroxypropylated granular starch is/are performed by centrifugation, flotation, separation, filtration or similar technologies, or a combination thereof.

The hydroxypropylated granular starch is preferably subjected to washing until the wished content of propylene glycol is reached. The starch should not swell or gelatinize in order to support the washing process and to enable the following process steps. The purified starch in form of a filter cake may subsequently be dried, for example in a flash dryer, to obtain a free-flowing powder of hydroxypropylated granular starch, or may be used as purified slurry (separation).

The inventive hydroxypropylated granular starch prepared with the inventive process surprisingly has an excellent purity and a reduced propylene glycol content of below 2 wt.-% of the starch. Preferably, the propylene glycol content of the hydroxypropylated granular starch is below 1 wt.-%, particularly preferably below 0.75 wt.-% of the starch. Due to the low propylene glycol content of the hydroxypropylated granular starch, its sustainability is significantly improved. The reduced level of contaminants and enhanced properties (such as slip resistance, open time, setting behavior and strength) allow the inventive, low-VOC hydroxypropylated granular starch prepared by the process according to the present invention to be used in environment-friendly products in the construction industry, such as in construction material compositions or construction adhesives.

It is noted that naturally, the propylene glycol content present in the hydroxypropylated granular starch does not increase when performing further processing and/or modification steps subsequent to hydroxypropylation. Therefore, the hydroxypropylated starch prepared according to the inventive process has a propylene glycol content of below 2 wt.-%, preferably below 1 wt.-%, particularly preferably below 0.75 wt.-% of the starch, both before and after being subjected to granule fragmenting conditions upon which its granular shape is lost.

In a preferred embodiment, the hydroxypropylated granular starch prepared in the process according to the present invention is modified in the aqueous suspension. Preferred further modifications of hydroxypropylated granular starch comprise crosslinking, bleaching, hydrophobic treatment, enzymatic treatment and/or acid thinning.

With regard to crosslinking as further modification of the hydroxypropylated granular starch, suitable reagents, such as multifunctional (for example difunctional or trifunctional) crosslinking agents, catalysts and/or accelerators, can be employed to react with a hydroxyl group of the starch. For example, phosphorus oxychloride, adipic-acetic mixed anhydride or sodium trimetaphosphate are commonly used for starch intended for use in food applications, whilst epichlorohydrin can be used to crosslink starch intended for use in industrial applications. To prepare a crosslinked starch, a crosslinking agent, such as epichlorohydrin, is preferably added to the aqueous suspension of the starch after the thermal treatment step. However, preferably, the hydroxypropylated granular starch according to the present invention is non-crosslinked. Crosslinking can limit or prevent the swelling of starch granules during further processing and reduces the solubility and mobility of the polymer molecules. This also worsens the dispersibility and thickening capacity of a construction material, and thus decreases the processability. It is noted that starch developed for the food industry (with a maximum allowable content of bound hydroxypropyl groups of 7 wt.-% of the starch) can be crosslinked to increase its strength. This allows their use in certain, limited construction applications with comparably low requirements. However, a starch with said low content of bound hydroxypropyl groups cannot meet higher requirements, for example with regard to slip resistance and strength. Such higher requirements can only be fulfilled with a starch having a higher content of bound hydroxypropyl groups than allowed in the food industry.

With regard to bleaching as further modification of the hydroxypropylated granular starch, the starch is oxidized by introduction of carboxyl and/or carbonyl groups into the starch molecules. Bleaching is usually performed under conditions of mild to moderate alkalinity and serves to stabilize the viscosity of starch dispersion and reduce retrogradation.

With regard to acid thinning as further modification of the hydroxypropylated granular starch, this is a depolymerization method. In general, depolymerization can be accomplished by using acid or enzyme "thinning" techniques. When using enzymatic thinning, the hydroxypropylated starch is in the form of an aqueous granular starch slurry or a gelatinized aqueous starch solution. In case of acid thinning, depolymerization can be performed for example in water. Depending on the depolymerization conditions (e.g. temperature or water content of the aqueous alkanol solution), the starch either remains in non-gelatinized, granular form or becomes gelatinized. Alternatively, gelatinized starch can be used to perform the depolymerization process. In the present invention, depolymerization by means of acid thinning, both with organic and/or inorganic acids, is preferably applied and performed in aqueous suspension, with the hydroxypropylated granular starch remaining in its granular shape.

Preferably, the hydroxypropylated granular starch is subjected to granule fragmenting conditions, particularly preferably to drum drying and/or gelatinization. This is preferably performed after obtaining the hydroxypropylated granular starch from the aqueous suspension and after its purification from by-products upon which its granular shape is lost. Thus, a hydroxypropylated starch is prepared by the process according to the present invention. Said hydroxypropylated starch can for example be provided in dry powder form. This provides for a good processability, which is particularly important in the construction industry.

If gelatinization is performed in the present invention, it can be performed in a slurry, i.e. the hydroxypropylated starch is stirred in water, preferably deionized water, to produce a slurry with a starch content preferably in the range of 20 wt.-%to 40 wt.-%, more preferably in the range of 25 wt.-% to 35 wt.-%, particularly preferably around 35 wt.-%, which allows for an efficient gelatinization and stable processing conditions. The gelatinization may be supported by adjusting the pH value, preferably in the range of 11.0 to 12.0, particularly preferably 11.5. Gelatinization is preferably performed by means of agitation in a reactor with a reaction temperature in the range of 75 °C to 95 °C, preferably in the range of 80 °C to 90 °C. In said temperature range, gelatinization proceeds efficiently and effectively in less than 3 h, preferably already in a time period of 45 min to 75 min. Particularly preferably, gelatinization is performed at 85 °C for about 60 min. Particularly preferably, a pressure reactor is used to allow the reaction to proceed quicker and more efficiently. When using a pressure reactor, the gelatinization process can be speeded up. Optionally, further chemicals can be added to the hydroxypropylated starch slurry - before or after gelatinization - to allow for further modification, for example carboxymethylation, cationization or crosslinking. Gelatinization serves to break down the intermolecular bonds of starch molecules in the presence of water and heat, which irreversibly dissolves the starch granules in water and leads to the loss of their granular shape. The starch paste obtained after gelatinization can subsequently be removed from the reactor and is preferably subjected to drying, particularly preferably to drum drying.

If a drying step is carried out in the present invention, through the effect of temperature and shear force, either the granular starch itself can be broken down or, in case the granules were already broken by means of gelatinization, the starch paste (i.e., the gelatinized starch) can be dried, for example by means of drum drying. Naturally, the exact processing parameters during drying depend on the properties of the starch, for example its source and consistency, and can be readily adjusted by a person skilled in the art.

In another preferred embodiment according to the present invention, the hydroxypropylated starch is subjected to further modification after the removal of by-products. Such further modification can be performed either before drying and/or gelatinization, or after drying, re-suspension and/or gelatinization, and can comprise hydroxyalkylation, anionization, carboxymethylation, cationization, crosslinking, modification by means of hydrophobic agents (e.g. through mixing of the starch with a fatty acid ester) and/or grafting (e.g. with products from the groups of polyvinyl alcohols, acrylamides, or monomers or polymers based on hydrocarbons).

Preferably, carboxymethylation is used as further modification of the hydroxypropylated starch prepared according to the present invention. Carboxymethylation cannot be performed in aqueous suspension. Due to the required high modification level without swelling, the starch rather needs to be in a gelatinized state. Thus, preferably, carboxymethylation is performed directly after gelatinization and prior to drying. To efficiently perform the modification reaction, the pH value in the beginning of the reaction is preferably in the range of 11 to 12, preferably about 11.5, and can for example be adjusted with NaOH. For carboxymethylation, chloroacetic acid or its sodium salt can be used. The resulting gelatinized, hydroxypropylated, and further modified starch exhibits excellent solubility in cold water and a high viscosity and is particularly suitable for use in the construction industry.

Preferably, hydroxypropylated starch according to the present invention has a Brookfield viscosity of at least 100 mPas (at 100 rpm and 20 °C; with 5% total solid content in water) in non-crosslinked state, further preferably up to 2,000 mPas, and particularly preferably in the range from 200 mPas to 1,000 mPas. In crosslinked state, the hydroxypropylated starch according to the present invention preferably has a Brookfield viscosity in the range of 1,000 mPas to 10,000 mPas, particularly preferably in the range of 1,500 mPas to 7,000 mPas. Obviously, the viscosity of the hydroxypropylated starch increases upon increase of the crosslinking degree. Use of a hydroxypropylated starch with a Brookfield viscosity within said range (as determined according to the method given in the present application) allows to form a very stable dispersion in water, particularly cold water (25 °C or below), i.e. phase separation and sedimentation of the starch do not occur so that an excellent processability is provided.

Due to its low propylene glycol content of below 2 wt.-% of the starch, the hydroxypropylated starch obtainable according to the inventive process has significantly improved sustainability. Thus, it is well suitable for use in sustainable, environmental-friendly products in the construction industry. In particular, the hydroxypropylated starch according to the present invention is suitable for use in a construction material composition and for use in a cementitious and/or dispersion-modified construction adhesive.

The present invention provides a construction material composition comprising a hydroxypropylated starch prepared according to the inventive process, with the hydroxypropylated starch preferably being present in an amount ranging from 0.005 wt.-% to 0.5 wt.-%, more preferably from 0.01 wt.-% to 0.3 wt.-%, particularly preferably from 0.02 wt.-% to 0.2 wt.-%, based on the total weight of the composition (dry basis).

The present invention further provides a cementitious and/or dispersion-modified construction adhesive comprising a hydroxypropylated starch prepared according to the inventive process, with the hydroxypropylated starch preferably being present in an amount ranging from 0.005 wt.-% to 0.5 wt.-%, more preferably from 0.01 wt.-% to 0.3 wt.-%, particularly preferably from 0.02 wt.-% to 0.2 wt.-%, based on the total weight of the adhesive (dry basis).

Preferably, the hydroxypropylated starch comprised in the construction material composition, and/or the cementitious and/or dispersion-modified construction adhesive is selected from the group consisting of maize starch, tapioca starch, rice starch, wheat starch, pea starch or any mixture thereof. Particularly preferably, the hydroxypropylated starch comprised in the construction material composition, and/or the cementitious and/or dispersion-modified construction adhesive is selected from the group consisting of waxy maize starch, waxy tapioca starch, waxy rice starch, waxy wheat starch, pea starch or any mixture thereof.

Construction material compositions and construction adhesives are preferably mineral-bound or dispersion-bound, such as hand-applied and machine-applied plasters, for example on the basis of gypsum, hydrated lime or cement, mortars, in particular thin-bed mortars, tile adhesives, gunned concrete, floor leveling compounds, cement and lime sand brick extrudates, joint fillers and putties.

Such construction material compositions and construction adhesives can comprise further additives and/or modification agents, such as hydrocolloids, re-dispersible plastic powders, antifoaming agents, swelling agents, fillers, light-weight additives, polyacrylates, polyacrylamides, hydrophobic agents, air-entraining additives, synthetic thickeners, dispersing aids, plasticizers, retarding agents, accelerators and/or stabilizers. Furthermore, fillers such as silica sand, dolomite, sand-lime and/or calcium sulfate dihydrate, are also suitable as additives and/or modification agents. The hydroxypropylated starch prepared according to the present invention can be formulated in dry form with said additives and/or modification agents and thus be specifically adapted to each application.

**Examples**

The following examples are supposed to further illustrate the invention as described within this application without any intention to limit the scope of the invention.

**Example 1 - Preparation of hydroxypropylated starch**

An aqueous suspension of granular maize starch was prepared by using the chemicals listed in Table 1 in the respective amounts. Starch was dispersed in deionized water to obtain a slurry. The so-formed slurry was transferred to a reactor and subsequently thermally treated at 55 °C under constant stirring for about 7 h to increase the susceptibility of the starch to hydroxypropylation. It is noted that if a crosslinked starch is intended to be prepared, a crosslinking agent, such as epichlorohydrin, could be added at this stage. Subsequently, a 15 wt.-% solution of sodium hydroxide (NaOH) and sodium sulfate ($Na_2SO_4$) were added carefully to the slurry under vigorous stirring, which was followed by stirring for about 15 min. The alkalinity was adjusted to 1.0 with NaOH under constant agitation.

*Table 1: Composition of the slurry*

| Chemical | Content (g) | Content (wt.-%) |
|---|---|---|
| Starch (dry) | 1,000 | 23.6 |
| Deionized water | 2,405 | 56.7 |
| Sodium hydroxide (solid) | 180 | 4.2 |
| Sodium sulfate (anhydrous) | 400 | 9.4 |
| Propylene oxide | 260 | 6.1 |
| *TOTAL* | 4,245 | 100 |

Subsequently, the slurry was cooled to below 30 °C, and propylene oxide was added to start the hydroxypropylation reaction. The reaction mixture was then heated to 35 °C and kept at said temperature for about 24 h. Afterwards, the reaction was stopped by decreasing the pH value to 4.5 with 10 wt.-% sulfuric acid (about 300 ml have to be added to the slurry). After completion of the reaction, the so-obtained hydroxypropylated granular starch was washed batchwise by means of a centrifuge. At first, the starch was de-watered at 1,500 rpm and subsequently washed with deionized water at about 20 °C for approximately 1 h to a conductivity of below 15 mS, which signifies a very low residual salt content. The washed wet cake was removed from the centrifuge and dried in a flash dryer to obtain a free-flowing powder.

**Example 2 - Gelatinization and drying of hydroxypropylated starch**

The hydroxypropylated starch was dispersed in deionized water to produce a 30 wt.-% slurry which was transferred to a reactor. 12 g of 50 wt.-% NaOH solution per kg starch was added to the slurry to adjust the pH value to about 11.5. The slurry was heated to 85 °C and stirred at 85 °C (gelatinization) for about 60 min. It is noted that optionally, further chemicals can be added for modification of the starch at this stage (see example 3). The gelatinized starch was then removed from the reactor and subjected to drum drying. The drum dryer (pilot scale) was operated at 5 bar steam pressure and a temperature of about 140 °C. The main roller was rotated with 5 rpm. The detailed parameters during drum drying depend on the consistency of the starch and can be readily adjusted by a person skilled in the art.

**Example 3 - Carboxymethylation of hydroxypropylated starch**

The hydroxypropylated, gelatinized starch was carboxymethylated in a paste reaction (composition according to Table 2). Gelatinization was performed according to the procedure of example 2, and the gelatinized starch was cooled to a temperature of about 60 °C to 70 °C. Subsequently, sodium chloroacetate and sodium hydroxide were added to the gelatinized starch. The mixture was stirred for about 60 min. Subsequently, the hydroxypropylated, carboxymethylated, gelatinized starch was removed from the reactor to be subjected to drum drying (as described in example 2).

*Table 2: Composition of the slurry for gelatinization and carboxymethylation*

| Chemical | Content (g) | Content (wt.-%) |
|---|---|---|
| Starch (dry) | 1,000 | 30.2 |
| Deionized water | 2,000 | 60.4 |
| Sodium hydroxide (50 wt.-%) | 150 | 4.5 |
| Sodium chloroacetate | 160 | 4.8 |
| *TOTAL* | 3,310 | 100 |

**Example 4 - Crosslinking of hydroxypropylated starch**

The hydroxypropylated, gelatinized starch was crosslinked in a paste reaction (composition according to Table 3). Gelatinization was performed according to the procedure of example 2, and the gelatinized starch was cooled to a temperature of about 60 °C to 70 °C. Subsequently, epichlorohydrin and sodium hydroxide were added to the gelatinized starch and the mixture was stirred for about 60 min. Subsequently, the hydroxypropylated, crosslinked, gelatinized starch was removed from the reactor to be subjected to drum drying (as described in example 2).

*Table 3: Composition of the slurry for gelatinization and epoxidation*

| Chemical | Content (g) | Content (wt.-%) |
|---|---|---|
| Starch (dry) | 1,000 | 31.7 |
| Deionized water | 2,000 | 63.4 |
| Sodium hydroxide (50 wt.-%) | 150 | 4.8 |
| Epichlorohydrin | 3 | 0.1 |
| *TOTAL* | 3,310 | 100 |

**Example 5 - Properties of hydroxypropylated starches**

Several starches selected from wheat starch (WS), waxy wheat starch (WWS), maize starch (MS) and waxy maize starch (WMS) were hydroxypropylated according to the method described in the present application. A concentration of starch in the slurry of 30 wt.-% was prepared, a sulfate content of 40 wt.-% (with respect to the weight of the starch) was added, and all starches were subjected to thermal treatment. For WMS and WS, the temperature was set to 54 °C, whilst for MS, various temperatures ranging from 48 °C to 60 °C were set. For WWS, a temperature of 52 °C was set. Further, two references (WS and MS) were tried to be hydroxypropylated without thermal pre-treatment.

The content of hydroxypropyl groups in the slurry as initially added was either 20 wt.-% or 25 wt.-% (with respect to the weight of the starch). The final content of hydroxypropyl groups bound to the starch after hydroxypropylation was determined by means of the Zeisel method and was in the range of 10.7 wt.-% to 17.8 wt.-% (with respect to the weight of the starch), with the entries in Table 4 being listed in increasing order.

Several properties of the hydroxypropylated starches were assessed, namely the viscosity increase of the slurry after 24 h (no = not increased; little = slightly increased; yes = thick), the formation of a filter cake (ok = filter cake completely formed; little = filter cake only partly formed), and gelatinized starch particles after drying (no = not gelatinized; little = partly gelatinized; yes = completely gelatinized).

A slight thickening of the slurry is acceptable, the best case is no obvious thickening of the slurry. The investigation of the dried starch gives a more detailed picture about the swelling/gelatinization state. A strong thickening of the slurry, however, makes dewatering and purification of the granular starch from by-products difficult or even impossible. The latter behavior was found for reference starches (WS and MS) without thermal pretreatment. These products were discarded.

The content of bound hydroxypropyl groups of the starches pre-treated at elevated temperature (48-60 °C) ranged from 10.7 wt.-% to 17.8 wt.-% (with respect to the weight of the starch). They showed no or only little gelatinization after drying and were well suitable for further processing and/or use. Further, all prepared hydroxypropylated starches showed a good filter cake formation (as listed in Table 4), a good centrifugability and had a propylene glycol content of below 1 wt.-% (with respect to the weight of the starch).

Thus, the results clearly reveal that the inventive process for preparing a hydroxypropylated granular starch is widely applicable with regard to starch source and parameters, such as temperature of thermal pre-treatment and initially added content of hydroxypropyl groups.

*Table 4: Properties of hydroxypropylated starches in dependence on starch source, processing parameters and content of hydroxypropyl groups*

| Starch type [A] | Temperature of thermal treatment (°C) | Content of hydroxypropyl groups (wt.-%) [B] | | Viscosity increase of slurry after 24 h | Filter cake | Gelatinization of dried starch |
|---|---|---|---|---|---|---|
| | | Initially added | Final [C] | no/little/ yes | ok/ little | no/little/ yes |
| WS | 23 | 20 | - | very thick, swollen, not suitable | | |
| MS | 23 | 20 | - | very thick, swollen, not suitable | | |
| WMS | 54 | 25 | 10.7 | no | ok | no |
| MS | 48 | 20 | 11.3 | no | ok | little |
| WMS | 54 | 20 | 11.8 | no | ok | no |
| WMS | 54 | 25 | 12.3 | no | ok | no |
| MS | 58 | 20 | 12.9 | little | ok | no |
| MS | 56 | 20 | 13.1 | no | ok | little |
| MS | 58 | 20 | 13.2 | no | ok | no |
| MS | 60 | 20 | 13.4 | little | ok | no |
| MS | 50 | 20 | 13.5 | little | ok | little |
| WS | 52 | 20 | 13.5 | no | ok | no |
| WMS | 54 | 25 | 13.7 | no | ok | no |
| MS | 52 | 20 | 13.9 | no | ok | little |
| WWS | 52 | 20 | 14.1 | no | ok | no |
| MS | 58 | 25 | 14.5 | yes | ok | no |
| WMS | 54 | 25 | 14.8 | no | ok | no |
| WS | 54 | 25 | 14.9 | little | little | no |
| MS | 58 | 25 | 15.0 | yes | ok | no |
| MS | 58 | 25 | 15.0 | yes | ok | no |
| WMS | 54 | 25 | 15.5 | no | ok | no |
| WS | 54 | 25 | 15.8 | little | ok | little |
| WS | 54 | 25 | 16.1 | little | ok | little |
| WWS | 52 | 25 | 17.8 | little | ok | no |

[A] WS = wheat starch, WWS = waxy wheat starch, MS = maize starch, WMS = waxy maize starch

[B] with respect to the starch content

[C] content of bound hydroxypropyl groups; determined by means of the Zeisel method

**Measurement methods**

**Method 1 - Determination of the amount of $C_3H_7O_2$ groups and MS (Zeisel method)**

The amount of $C_3H_7O_2$ groups of hydroxypropylated starch was determined by means of the Zeisel method, analog to ASTM D4794 (2017). The modified starch was chemically digested with hydroiodic acid and adipic acid as catalyst and an ether cleavage according to Zeisel was performed. The formed alkyl iodides were subsequently extracted into the added xylene phase and determined via gas chromatography. It is noted that it is also possible to determine other degrees of molar substitution by means of the Zeisel method. For example, the carboxymethylation degree can be determined by acid catalytic cleavage of the polysaccharide and subsequent liquid chromatography determination.

*Preparation of internal standard solution:* Approximately 70 ml xylene was weighed into a 100 ml flask, and the flask was tared on an analytical balance (0.1 mg accuracy). Toluene was added by means of a piston stroke pipette, and the weight of added toluene was recorded. Xylene was added up to the 100 ml mark of the flask. The content of the flask was mixed by shaking and subsequently transferred to Schott vials (volume of 50 ml) which were wrapped with aluminum foil for light protection, labeled (with "low", "medium" or "high" in dependence on the added toluene amount, as per Table 5) and stored in the refrigerator.

*Table 5: Added amount of toluene and expected content of $C_3H_7O_2$ groups of starch*

| Standard | Toluene amount ($\mu$l) | Expected content of $C_3H_7O_2$ groups (wt.-%) |
|---|---|---|
| low | 150 | < 15 |
| medium | 500 | 15-30 |
| high | 1,000 | > 30 |

*Preparation of external standard solution:* Approximately 70 ml xylene was weighed into a 100 ml flask, and the flask was tared on an analytical balance (0.1 mg accuracy). Toluene and isopropyl iodide were added by means of a piston stroke pipette, and the weight of added toluene and isopropyl iodide was recorded. Xylene was added up to the 100 ml mark of the flask. The content of the flask was mixed by shaking and subsequently transferred to Schott vials (volume of 25 ml), which were wrapped with aluminum foil for light protection, labeled (with "S1", "S2", "S3", "S4" in dependence on the added amount of toluene and isopropyl iodide, as per Table 6) and stored in the refrigerator.

*Table 6: Added amounts of toluene and isopropyl iodide*

| Standard | Toluene amount ($\mu$l) | Isopropyl iodide amount ($\mu$l) |
|---|---|---|
| S1 - low | 100 | 100 |
| S2 - medium | 300 | 300 |
| S3 - high | 500 | 500 |
| S4 - very high | 1,000 | 1,000 |

*Chemical digestion:* 50 mg to 100 mg of the starch ether were weighed into a 5 ml vial (Reactivial, Supelco, US) and the actual weight was recorded (3 times determination of dry substance and calculation of average weight). Approximately the double amount of adipic acid was added. Subsequently, 2 ml of the internal standard solution (prepared as described above) was added by pipetting, followed by addition of 2 ml hydroiodic acid. The vial was tightly closed and stirred on a magnetic stirrer to homogenize its content. Afterwards, the total weight (i.e., weight of the vial and its content) was determined by means of an analytical balance (0.1 mg accuracy). The samples were then covered, stored at 140 °C for 1 h in a heating block (Pierce, Gemini BV, Netherlands) to perform chemical digestion, allowed to cool to room temperature (to about 20 °C to 25 °C) and re-weighed. It is noted that the reduction of the total weight of the sample must not exceed 10 mg to allow its use for further analysis. The xylene phase (approximately 1 ml) was transferred with a piston stroke pipette into a gas chromatographic (GC) vial, and the vial was closed.

*Gas chromatographic (GC) analysis:* The prepared samples in the GC vials were subjected to GC analysis. A gas chromatograph (Thermo-Fisher GC Trace 1300, Thermo Fisher Scientific, US) equipped with an autosampler (Thermo-Fisher AS 1310, Thermo Fisher Scientific); a column (TG-17MS, Thermo Fisher Scientific) having a phase of medium polarity (50% diphenyl- and 50% dimethyl-polysiloxane), a length of 30 m, a diameter of 0.35 mm, a film thickness of 0.25 $\mu$m and a maximum temperature of 280/320 °C; and a flame ionization detector (FID, Thermo Fisher Scientific) were employed. Helium was used as carrier gas with a constant flow of 1,000 ml/min, whilst 25 ml/min nitrogen (25 ml/min) was used as make-up gas for the detector. As burning gases, synthetic air (free of carbon hydrogens; 300 ml/min) and hydrogen (30 ml/min) were employed. The split was set to 1:50 and the purge to 5 ml/min. The temperature of the injector was 200 °C, whilst the column temperature was initially held at 65 °C for 5 min, subsequently heated to 250 °C with a heating rate of 20 °C/min and held for 5 min at 250 °C. The detector was operated at 300 °C and a data collection frequency of 25 Hz. The run time of the measurement was about 18 min. The autosampler was operated with low draw speed, a fill stroke of 4, half sample depth and a cold needle injection technique.

*Calculation of amount of $C_3H_7O_2$ groups:* The quantification of $C_3H_7O_2$ of the samples was performed by determination of a response factor (RF) of the external standards according to Formula (1). Isopropyl iodide (i.e., the alkoxyl) has a retention time of about 3.03 min, whilst the retention time of toluene is approximately 4.1 min.

$$RF = \frac{Weight\ C_3H_7O_2 \cdot Area\ toluene}{Area\ alkoxyl \cdot Weight\ toluene} \qquad (1)$$

The amount of $C_3H_7O_2$ was subsequently calculated according to Formula (2), with "IS" being the weight of added toluene (in mg) divided by 2 ml of the internal standard solution, and "weight sample" being the total weight of the sample.

$$C_3H_7O_2\ (\%) = \frac{RF \cdot Area\ alkoxyl \cdot IS \cdot 100}{Area\ toluene \cdot Weight\ sample} \qquad (2)$$

The manual calculation of the amount of $C_3H_7O_2$ with Formulas (1) and (2) is not necessary if the respective values (such as sample weight, weight of dry substance, weights of internal and external standards) are entered into the GC software, as in the present application. Further, it is noted that a software commonly uses a calibration line and not a single standard for the calculation.

*Calculation of the degree of molar substitution (MS):* At first, the content of propylene glycol, which is a by-product generated during (hydroxy-)propylation, needs to be subtracted from the $C_3H_7O_2$ content. Determination of the propylene glycol content can be performed by means of high-pressure liquid chromatography (HPLC; see method 2). The degree of molar substitution (MS) cannot be calculated using the $C_3H_7O_2$ content, the result rather needs to be converted to the content of $C_3H_6O$ groups according to Formula (3), with 58.08 g/mol being the molecular weight of $C_3H_6O$ and 75.09 g/mol being the molecular weight of $C_3H_7O_2$. It is noted that the $C_3H_7O_2$ content after subtraction of propylene glycol is used for the calculation according to Formula (3).

$$C_3H_6O\ (\%) = C_3H_7O_2(\%) \cdot \frac{58.08}{75.09} \qquad (3)$$

The MS was calculated according to Formula (4), with 162.14 g/mol being the molecular weight of an anhydroglucose unit ($C_6H_{10}O_5$) and 58.08 g/mol being the molecular weight of the molecular weight of $C_3H_6O$.

$$MS = \frac{162.14 \cdot C_3H_6O\ (\%)}{58.08 \cdot (100 - C_3H_6O(\%))} \qquad (4)$$

**Method 2 - Determination of content of propylene glycol in starch derivatives**

The content of propylene glycol ($C_3H_8O_2$) of a starch or its derivative was determined by means of high-pressure liquid chromatography (HPLC). A stock solution of propylene glycol was prepared by weighing 500 ± 1 mg propylene glycol into a 50 ml flask and filling it up to the 50 ml mark with deionized water. Alternatively, an eluent (5 mM sulfuric acid) could be used to fill up the flask. The stock solution was subsequently diluted to obtain standard solutions according to Table 7 in the desired measurement range.

*Table 7: Standard solutions with concentration*

| Standard solution volume (ml) | Propylene glycol concentration (mg/ml) |
| --- | --- |
| 0.25 | 50 |

(continued)

| Standard solution volume (ml) | Propylene glycol concentration (mg/ml) |
|---|---|
| 0.5 | 100 |
| 1.0 | 200 |
| 2.5 | 500 |

Samples were prepared by weighing $250 \pm 1$ mg propylene glycol into a 50 ml flask and filling about 2/3 of the flask with deionized water. Extraction was performed for 2 h under stirring. Subsequently, the flask was filled up to the 50 ml mark with deionized water. The sample was filtrated using a 0.45 $\mu$m filter and loaded onto the column at 65 °C. In case the sample concentration did not fall within the calibration range, it was diluted accordingly or the sample weight was increased. In case of dissolved substances, e.g. proteins, that precipitated upon lowering of the pH value, the pH value of the sample was adjusted to about 2 to 3, the sample was hold at 4 °C for at least 30 min, at which temperature filtration was subsequently performed. HPLC analysis was performed after the sample had warmed up to room temperature.

The HPLC analysis was performed with a flow of 0.6 ml/min, an injection volume of 20 $\mu$l, a column temperature of 65 °C and with the refractive index as detection parameter. The retention time of propylene glycol was 13.8 min. Prior to each measurement series, the calibration was checked with a standard solution. In case of a deviation of more than 2% from the target value, recalibration was performed. The calibration function was calculated by linear regression from the peak area as independent variable in dependence on the concentration. The calibration was repeated in case the calibration coefficient for propylene glycol was below 0.999. The numerical values for factor, offset and peak area were calculated by the software and inserted into Formula (5) to determine the concentration.

$$Concentration \left(\frac{mg}{l}\right) = Factor \cdot Peak\ Area + Offset \qquad (5)$$

The propylene glycol content was determined according to Formula (6), with "concentration" being the concentration of propylene glycol in mg/l obtained by HPLC analysis (Formula (5)), "volume" being the volume of the flask in ml and "weight" being the weight of the starch in g.

$$Propylene\ glycol\ content\ (\%) = \frac{Concentration \cdot Volume}{Weight \cdot 10\,000} \qquad (6)$$

**Method 3 - Measurement of Brookfield viscosity**

To determine the Brookfield viscosity of a starch, finely ground starch powder was added to water upon stirring with a turbine agitator at 1,000 rpm to prepare a 5% starch paste, which was stirred for 10 min at 1,500 rpm. The Brookfield viscosity was determined with a Brookfield rotational viscometer at 20 °C and a rotational speed of the spindle of 100 rpm.

**Method 4 - Determination of alkalinity**

Approximately 10 g slurry or approximately 0.5 to 1 g starch sample (depending on the expected alkalinity) are weighed with an accuracy of 0.01 g into a 250 ml titration flask, diluted with approximately 100 ml deionized water and titrated with 0.1 N HCl against phenolphthalein as indicator from pink to white (colorless).

**Claims**

1. Process for preparing a hydroxypropylated granular starch with a degree of molar substitution (MS) of hydroxypropyl groups of above 0.25 and a propylene glycol content of below 2 wt.-% of the starch, comprising the steps of:

    (a) providing a granular starch in an aqueous suspension;
    (b) thermally treating the granular starch;
    (c) hydroxypropylating the treated starch with a hydroxypropylating agent; and

(d) obtaining the hydroxypropylated granular starch from the aqueous suspension.

2. The process according to the preceding claim, **characterized in that** the hydroxypropylated granular starch has a degree of molar substitution (MS) of hydroxypropyl groups of above 0.35.

3. The process according to any of the preceding claims, **characterized in that** the step of thermally treating the granular starch is performed for at least 4 h at a temperature in the range of 45 °C to 65 °C.

4. The process according to any of the preceding claims, further comprising the step of modifying the hydroxypropylated granular starch in the aqueous suspension, such as by means of crosslinking, bleaching, hydrophobic treatment, enzymatic treatment and/or acid thinning.

5. The process according to any of the preceding claims, further comprising the step of subjecting the hydroxypropylated granular starch to drum drying and/or gelatinization.

6. A hydroxypropylated granular starch prepared by a process according to any of claims 1 to 4.

7. The hydroxypropylated granular starch according to claim 6, **characterized in that** the starch is non-crosslinked.

8. A hydroxypropylated starch prepared by the process according to claim 5.

9. The hydroxypropylated starch according to claim 8, **characterized in that** the starch is selected from the group consisting of maize starch, tapioca starch, rice starch, wheat starch, pea starch or any mixture thereof.

10. The hydroxypropylated starch according to claim 8 or 9, **characterized in that** the starch is a waxy starch, preferably selected from the group consisting of waxy maize starch, waxy tapioca starch, waxy rice starch, waxy wheat starch or any mixture thereof.

11. The hydroxypropylated starch according to any of claims 8 to 10, **characterized in that** the propylene glycol content is below 1 wt.-%, preferably below 0.75 wt.-% of the starch.

12. The hydroxypropylated starch according to any of claims 8 to 11, **characterized in that** the starch has a content of bound hydroxypropyl groups of above 9 wt.-%, preferably in the range of 12 wt.-% to 25 wt.-% of the starch.

13. Construction material composition comprising a hydroxypropylated starch prepared according to any of claims 1 to 5, with the hydroxypropylated starch preferably being present in an amount ranging from 0.005 wt.-% to 0.5 wt.-%, based on the total weight of the composition (dry basis).

14. Cementitious and/or dispersion-modified construction adhesive comprising a hydroxypropylated starch prepared according to any of claims 1 to 5, with the hydroxypropylated starch preferably being present in an amount ranging from 0.005 wt.-% to 0.5 wt.-%, based on the total weight of the adhesive (dry basis).

Europäisches
Patentamt

European
Patent Office

Office européen
des brevets

**EUROPEAN SEARCH REPORT**

Application Number

**EP 21 20 7876**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 3 577 407 A (HJERMSTAD ERLING I) 4 May 1971 (1971-05-04) * col.2, line 12-col.3, line 13 * ----- | 1-14 | INV. C08B31/12 C08L3/08 C09J103/08 C04B24/38 |
| X | US 3 725 386 A (HANSON C ET AL) 3 April 1973 (1973-04-03) * col.1, lines 37-39; col.3, lines 31-37; examples 16-18 * ----- | 6-14 | |

TECHNICAL FIELDS
SEARCHED (IPC)

C08B
C08L
C09J
C04B

The present search report has been drawn up for all claims

| Place of search | Date of completion of the search | Examiner |
|---|---|---|
| Munich | 8 April 2022 | Pellegrini, Paolo |

EPO FORM 1503 03.82 (P04C01)

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

## ANNEX TO THE EUROPEAN SEARCH REPORT
## ON EUROPEAN PATENT APPLICATION NO.

EP 21 20 7876

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2022

| Patent document cited in search report | | Publication date | Patent family member(s) | Publication date |
|---|---|---|---|---|
| US 3577407 | A | 04-05-1971 | NONE | |
| US 3725386 | A | 03-04-1973 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0530768 A1
- WO 2013058912 A1
- WO 2009065159 A1
- EP 2212259 A1
- US 6541060 B2
- US 3505110 A
- US 4452978 A
- US 2845417 A
- US 3577407 A